**Europäisches Patentamt**

**European Patent Office**

**Office européen des brevets**

(19)

(11) Publication number: **0 005 079**
A1

(12)

# EUROPEAN PATENT APPLICATION

(21) Application number: **79300699.0**

(22) Date of filing: **25.04.79**

(51) Int. Cl.²: **H 02 P 3/12**
**H 02 P 3/00, G 03 G 15/00**

(30) Priority: **25.04.78 GB 1624878**

(43) Date of publication of application:
**31.10.79 Bulletin 79/22**

(84) Designated Contracting States:
**DE FR**

(71) Applicant: **THE RANK ORGANISATION LIMITED**
**11 Hill Street**
**London W1X 8AE(GB)**

(72) Inventor: **Klimek, Norbert Max**
**27 Wilton Road**
**Cockfosters Hertfordshire(GB)**

(74) Representative: **Cullis, Roger et al,**
**c/o H.G. Amann, Patents Manager 439 Godstone Road**
**Whyteleafe Surrey, CR3 0YG(GB)**

(54) **An electric motor control circuit.**

(57) A control circuit for an electric motor (11) for completing a loop circuit (II) for the current driven by the back e.m.f. generated when the motor is de-energised but still turning, in order to provide a braking effect on the motor. The motor is controlled to run incrementally by a motor control signal.

The control circuit includes a selectively conductive shunt element (T₂) in the form of a transistor connected in parallel with the motor, the transistor is controlled to conduct or not by the motor control signal which holds the transistor (T₂) in a non-conducting state when the motor is energised so that during normal running of the motor all the drive current passes through the motor (11), none passing through the transistor (T₂) which only carries the current generated by the back e.m.f. when the motor is de-energised and the shunt transistor (T₂) is biased to a conducting state.

Fig 2

- 1 -

## An electric motor control circuit

The present invention relates to an electric motor control circuit adapted for controlling a direct current electric motor for incremental movement. In particular the invention relates to an electric motor control circuit incorporating a switching element $T_1$ in series with the motor 11 for controlling its energisation, and a conductive element in parallel with the motor to provide a path for the current driven by the back e.m.f. generated when the motor 11 is de-energised but still turning whereby to provide a circuit for the back e.m.f. in order to brake the motor.

In order to achieve incremental movement of an electric motor it is necessary to feed the motor with pulses of current the duration of which correspond to the time for which the motor is to be maintained in operation from which the distance moved can be determined if a load is constant or otherwise known. For certain uses, for example for controlling the line shift of an electrosensitive printer, it is required to drive an electric

- 2 -

0005079

motor through relatively small increments of movement by fairly short pulses derived by controlling a switching element in series with the motor coil to conduct for short periods. One problem associated with such a system is the fact that the motor continues to turn after the signal ceases and the switching element is turned off, due to inertial effects. In order to reduce these it is known to employ the back e.m.f. generated by the motor when turning to generate a braking effect. However, in many applications the use of this back e.m.f. in generating a braking force for a drive motor is achieved by means of suitable electrical interruptors in order selectively to complete a circuit for the current driven by the back e.m.f.

For some applications, however, such as for controlling the line shift of an electrostatic printer, it is required to provide the braking effect automatically as soon as the input signal ceases. A control circuit is known for achieving this economically in a small scale device. This control circuit comprises essentially a shunt resistor across the motor coil. In use the shunt resistor merely passes current while the motor is running, and when the motor is switched off it serves as a current path for the back e.m.f. in a closed loop with the motor coil without requiring any other switching connections than are already provided by the switching element which controls the current through the motor coil.

This known circuit has the advantage of simplicity, but also has a number of disadvantages; for example, the current flowing through the shunt resistor while the motor is running represents a current loss and the heat generated by this current must be dissipated; in other words the system runs "hot". Moreover, for the system to work well the shunt resistor must be of the same order of magnitude as the resistance of the motor coil, which means that the switching element which controls the operation of the motor must be capable of carrying well in excess of twice the normal motor current (bearing in mind the transient surge when switching on) which lead to added expense for the system both in terms of initial outlay and running costs as well as running the risk of overheating of the "hot" system if adequate cooling is not effected or should fail.

The invention as claimed seeks to provide an electric motor control circuit, particularly one suitable for controlling a d.c. motor, which allows the motor to operate incrementally whilst nevertheless obtaining the advantage of a feedback loop for braking when the motor is turned off, thereby avoiding the necessity for a switching element of the control circuit to take more than the current through the motor coil.

The invention as claimed solves the problem of how to provide a feedback braking loop which takes current when the engine is switched off but not when it is running by being characterised in that the conductive element $T_2$ in parallel with the motor 11 is selectively conductive, and in that there are means $R_3$, $R_4$, $T_3$ for controlling the selectively conductive element $T_2$ to conduct only when the motor 11 is de-energised. The advantages offered by this solution are principally that the circuit runs "cold" inasmuch as there are no constituent parts through which an unwanted heating current passes during running of the motor; moreover the selectively conductive element can be switched by the same control signal that controls the running of the motor thereby ensuring precise synchronisation of timing.

The switching element may be a relay or silicon controlled rectifier although preferably it is a first transistor the base of which receives control signals determining the periods of energisation of the motor.

Likewise, the selectively conductive element may be a relay or a silicon controlled rectifier although, again, it is preferred for it to be a second transistor. In this preferred embodiment the second transistor is connected in a circuit sensitive to the control signals fed to the selectively conductive element and operative in response thereto to ground the base of the second transistor for the duration of a control signal whereby to prevent conduction of the second transistor during the running period of the motor.

- 5 -

The circuit sensitive to the control signals preferably includes a third transistor the base of which is connected to the base of the first transistor to receive control signals contemporaneously therewith. The third transistor thus conducts with the first transistor so that whenever the motor current is flowing the base of the second transistor which is connected in parallel therewith is grounded so that the second transistor is non-conducting during this period. When the control signal ceases the first and third transistors are biased off and the second transistor is now biased to conduct since the voltage at its base rises as the third transistor is switched off thereby permitting current to circulate through the collector/emitter junction.

Of course, the selectively conductive element may be a controlled rectifier in which case the circuit sensitive to the occurrence of control signals is operable to fire the controlled rectifier on the trailing edge of the control signals.

In addition, there may be further provided a circuit in parallel with the motor sensitive to the current flowing therein and operable to produce an output signal when the current in the motor falls to zero after the end of a drive control signal to the switching element. This is useful since the end of the drive control signal does not accurately indicate when the motor stops moving and if it is required to tie in this movement with other operations of a mechanism, such as an electrosensitive printer, then a signal representing exactly when the motor has stopped turning and the associated mechanism is stationary is required. This circuit for producing an output signal when the motor stops turning preferably includes a light emitting diode in parallel with the motor and a photo-transistor positioned to receive light emitted thereby. The photo-transistor conducts when the light emitting diode produces light and is non-conductive when the light emitting diode is not conducting. Therefore, a voltage signal taken from the collector of the photo-transistor will be at zero, or anyway a low potential when the photo-transistor is conducting, and will rise to a higher potential when the photo-transistor cuts off thereby providing a sharp edge representing the moment when the motor stops turning.

One way of carrying out the invention is described in detail below with reference to drawings which illustrate a prior art circuit and one specific embodiment of the invention. In the drawings :-

Figure 1 is a circuit diagram illustrating a prior art motor control system;

Figure 2 is a circuit diagram illustrating the circuit of the present invention; and

Figure 3 is a waveform diagram illustrating the form of the current at various points in the circuit and also indicating the velocity of the motor during one controlled increment.

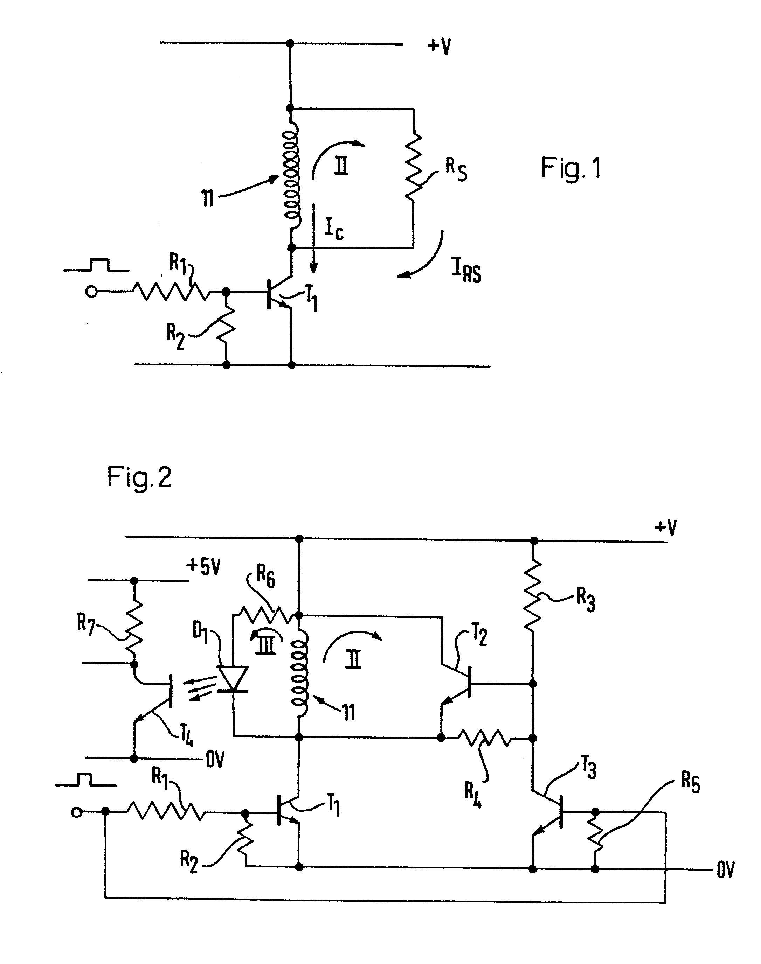

Referring now to Figure 1 there is shown, schematically, a motor coil 11 which is connected in series with a transistor $T_1$ between a source of supply +V and ground. The base of the transistor $T_1$ is fed _via_ a resistor $R_1$ from a control signal source (not indicated) and the junction between the base of transistor $T_1$ and the resistor $R_1$ is grounded _via_ a resistance $R_2$.

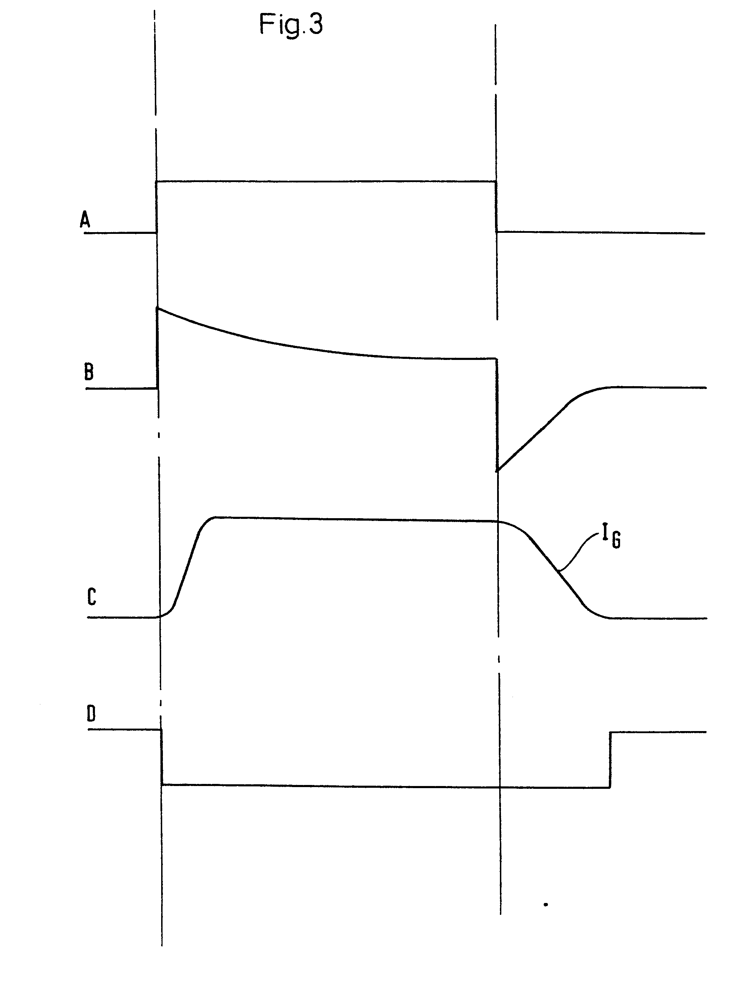

Across the motor coil 11 is a shunt resistor $R_S$. In use of this system a positive pulse represented by the line A in Figure 3 is applied to the base of the transistor $T_1$ causing this to conduct for the duration of the positive pulse. While the transistor $T_1$ conducts a current $I_C$ flows in the coil 11 and a corresponding current $I_{RS}$ flows in the resistor $R_S$ which, for good operation of the circuit, must be of substantially the same resistance as the resistance of the coil 11. The current $I_C$ flowing in the coil 11 is indicated by the line B in Figure 3. As will be seen this experiences a transient peak corresponding with the leading edge of the control signal A and settles exponentially. When the trailing edge of the control signal A occurs the transistor $T_1$ immediately switches off, but since the motor is still turning a current is generated in the coil 11 in the reverse direction, the motor acting now as a generator. This current circulates, in the direction illustrated by the arrow II of Figure 1 inducing a braking force in a known way until the motor stops turning.

Referring now to Figure 2 in which components which are identical with those in Figure 1 have been identified with the same reference numerals, the motor coil 11 is shunted by a second transistor $T_2$ the emitter of which is connected not only to a junction point between the coil 11 and the collector of the transistor $T_1$, but also, _via_ a resistor $R_4$, to a junction point between the base of the transistor $T_2$ and the collector of a third transistor $T_3$ which is connected in series between a resistor $R_3$ and ground. The resistor $R_3$ is connected to the voltage source +V and biases the base of the transistor $T_2$ to make it conductive when the transistor $T_3$ is turned off.

The base of the transistor $T_3$ is connected to earth _via_ a resistor $R_5$, and is also directly connected to the input from which arrive the drive control pulse signals A. When no drive pulse signal A is present the control signal line is at zero volts and, likewise, the bases of the transistors $T_1$ and $T_3$ are grounded _via_ the resistors $R_2$, $R_5$. The transistor $T_2$ is biased to a conducting state, but since both the transistors $T_1$ and $T_3$ are turned off it does not conduct.

Across the coil 11 there is also a light emitting diode $D_1$ in series with a resistor $R_6$, and positioned to receive light emitted by the light emitting diode $D_1$ is a photo-transistor $T_4$ the collector of which is connected in series with a resistor $R_7$ to a source of positive potential of about 5 volts. The emitter of the photo-transistor $T_4$ is earthed.

When a drive control signal pulse A arrives at the bases of the transistors $T_1$ and $T_3$ these are both biased to conduct and current starts to flow in the coil 11. As the transistor $T_3$ conducts the voltage at the base of transistor $T_2$ falls to zero and $T_2$ is thus biased off. Current also flows in the resistor $R_6$ and the diode $D_1$ emitting light and turning the transistor $T_4$ on so that the voltage at its collector is substantially zero.

At the trailing edge of the drive control pulse signal A the transistors $T_1$ and $T_3$ are turned off, their bases being earthed via the resistors $R_2$, $R_5$ and the voltage at the base of transistor $T_2$ rises biasing this transistor to its conductive state. Since the motor is still turning at this point it acts as a generator causing a reverse current to flow in the direction of the arrow II through the transistor $T_2$, and also in the direction of the arrow III through the resistor $R_6$ and the light emitting diode $D_1$ so that the collector of the photo-transistor $T_4$ remains at a low voltage. The braking effect caused by the current flowing in the coil 11 is directly proportional to the velocity of the rotor of the motor so that a more or less constant deceleration slope is achieved, as indicated by the line $I_G$ in Figure 3. The velocity of the motor is indicated by the line C in Figure 3. As the current falls to zero the light emitting diode ceases to conduct and likewise, the photo-transistor $T_4$ is turned off so that the voltage at its collector rises sharply, as shown by the line D in Figure 3 to provide an output signal representative of

0005079

the exact end of motion of the motor. This can be fed
as a control signal to a PIA port of a micro-processor
which, conveniently, provides the control drive pulses
also.

Claims:

1.  An electric motor control circuit incorporating a switching element ($T_1$) in series with the motor (11) for controlling its energisation, and a conductive element in parallel with the motor to provide a path for the current driven by the back e.m.f. generated when the motor (11) is de-energised but still turning whereby to provide a circuit for the back e.m.f. in order to brake the motor, characterised in that the conductive element ($T_2$) in parallel with the motor (11) is selectively conductive, and in that there are means ($R_3$, $R_4$, $T_3$) for controlling the selectively conductive element ($T_2$) to conduct only when the motor (11)is de-energised.

2.  An electric motor control circuit as claimed in Claim 1, in which the switching element ($T_1$) is a first transistor the base of which receives control signals determining periods of energisation of the motor (11).

3.  An electric motor control circuit as claimed in Claim 2, in which the selectively conductive element ($T_2$) is a second transistor.

4.  An electric motor control circuit as claimed in Claim 3, in which the second transistor ($T_2$) is connected in a circuit ($R_3$, $R_4$, $T_3$) sensitive to the control signals and operative in response thereto to ground the base of the second transistor ($T_2$) for the duration of a control signal whereby to prevent conduction during the running period of the motor (11).

5. An electric motor control circuit as claimed in Claim 4, in which the circuit ($R_3$, $R_4$, $T_3$) sensitive to the control signals includes a third transistor ($T_3$) the base of which is connected to the base of the first transistor ($T_1$) to receive control signals contemporaneously therewith.

6. An electric motor control circuit as claimed in Claim 1 or Claim 2, in which the selectively conductive element is a controlled rectifier.

7. An electric motor control circuit as claimed in Claim 6, in which there is a circuit sensitive to the occurrence of drive control signals operable to fire the controlled rectifier on the trailing edge of the drive control signals.

8. An electric motor control circuit as claimed in any preceding claim, in which there is provided a further circuit ($R_6$, $D_1$) in parallel with the motor (11), the said further circuit ($R_6$, $D_1$) being sensitive to the current flowing therein and operable to produce an output signal when the current in the motor (11) falls to zero after the end of a drive control signal to the switching element ($T_1$).

9. An electric motor control circuit as claimed in Claim 8, in which the said further circuit ($R_6$, $D_1$) for producing an output signal when the motor (11) stops turning includes a light emitting diode ($D_1$) in parallel

with the motor (11) and a photo-transistor ($T_4$) positioned to receive light emitted thereby.

Fig.1

Fig.2

Fig.3

| European Patent Office | EUROPEAN SEARCH REPORT | Application number EP 79 30 0699 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.³) |
|---|---|---|---|
| X | <u>DE - A - 2 726 810</u> (NIPPON KOGAKU)<br>* Page 6, line 24 - page 11, line 32; figure 1 *<br><br>-- | 1-5 | H 02 P 3/12<br>3/00<br>G 03 G 15/00 |
| | <u>US - A - 3 379 949</u> (CARL D. TODD)<br>* Column 1, line 1 - column 3, line 62; figure 1 *<br><br>-- | 1,3,4 | |
| | <u>US - A - 3 509 441</u> (NEWELL G. WELCH)<br>* Column 1, line 45 - column 2, line 40; figure 1 *<br><br>-- | 6 | TECHNICAL FIELDS SEARCHED (Int.Cl.³)<br><br>H 02 P 3/12<br>3/08<br>3/06<br>3/02<br>3/00 |
| | <u>US - A - 3 916 276</u> (ALLEN E. OTTO-SON)<br>* Column 5, line 51 - column 6, line 68; figure 1 *<br><br>-- | 6 | |
| | <u>US - A - 3 860 860</u> (ROBERT J. MORAN et al.)<br>* Column 6, line 14 - column 6, line 28; figure 1 *<br><br>-- | 7 | CATEGORY OF CITED DOCUMENTS |
| | <u>US - A - 3 911 342</u> (WARREN E. HER-WIG)<br>* Column 3, line 40 - column 3, line 62; column 4, line 63 - column 5, line 41; figures 1-5 *<br><br>---- | 8 | X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | The present search report has been drawn up for all claims | | |
|---|---|---|---|
| Place of search<br>The Hague | Date of completion of the search<br>12-06-1979 | Examiner<br>RUGGIU | |